# EUROPEAN PATENT SPECIFICATION

(11) **EP 3 875 836 B1**
(45) Date of publication and mention of the grant of the patent: **22.07.2026**
(21) Application number: 21160255.2
(22) Date of filing: 02.03.2021
(51) Int. Cl.: F17C 13/00

(54) **DELIVERY TANK WITH PRESSURE REDUCTION, SATURATION AND DESATURATION FEATURES**
AUSGABETANK MIT DRUCKSENK-, SÄTTIGUNGS- UND ENTSÄTTIGUNGSFUNKTIONEN
RÉSERVOIR DE DISTRIBUTION DOTÉ DE CARACTÉRISTIQUES DE RÉDUCTION DE PRESSION, DE DÉSATURATION ET DE SATURATION

(30) Priority: 02.03.2020 US 202062983901 P
(43) Date of publication of application: 08.09.2021
(73) Proprietor: Chart Inc., Ball Ground, GA 30107 (US)
(72) Inventor: ROSENBAUM, Radek, Ball Ground, GA 30107 (US); KUBICA, Jan, Ball Ground, GA 30107 (US)
(74) Representative: Marks & Clerk LLP

(56) References cited:
- EP-A1- 3 196 534
- WO-A1-2015/067840
- US-A1- 2005 132 719
- US-A1- 2015 204 604
- US-A1- 2016 252 215

## Description

### CLAIM OF PRIORITY

This application claims the benefit of U.S. Provisional Application No. 62/983,901, filed March 2, 2020.

### FIELD OF THE DISCLOSURE

The present disclosure relates generally to a cryogenic delivery tank for fueling and defueling of an on-board vehicle tank or other use device with a cryogenic fuel, more particularly, the fueling and defueling of liquefied natural gas.

### BACKGROUND

Natural gas is useful as an alternate fuel source for powering vehicle engines. It is typically stored and transported as Liquefied Natural Gas (LNG) because it occupies a much smaller volume (approximately 1/600^{th} the gaseous state). Temperature and pressure regulation of liquefied natural gas is extremely important. Liquefied Natural Gas is stored in insulated cryogenic tanks because of the low temperature requirements (~-160 °C) and typically at lower pressures. Furthermore, the stored cryogenic liquid is typically saturated, so that the gas and liquid states simultaneously exist at a desired temperature and pressure.

Vehicles utilizing natural gas typically include an on-board vehicle tank. On-board vehicle tanks may have specific pressure or temperature requirements. During the liquefied natural gas fueling and defueling of on-board vehicle tanks, pressure reduction for cooling of the vapor space of the liquefied natural gas delivery tank or increase in saturation pressure of the liquefied natural gas delivery tank is typically needed. Fueling of these vehicle tanks can, therefore, be a complicated process.

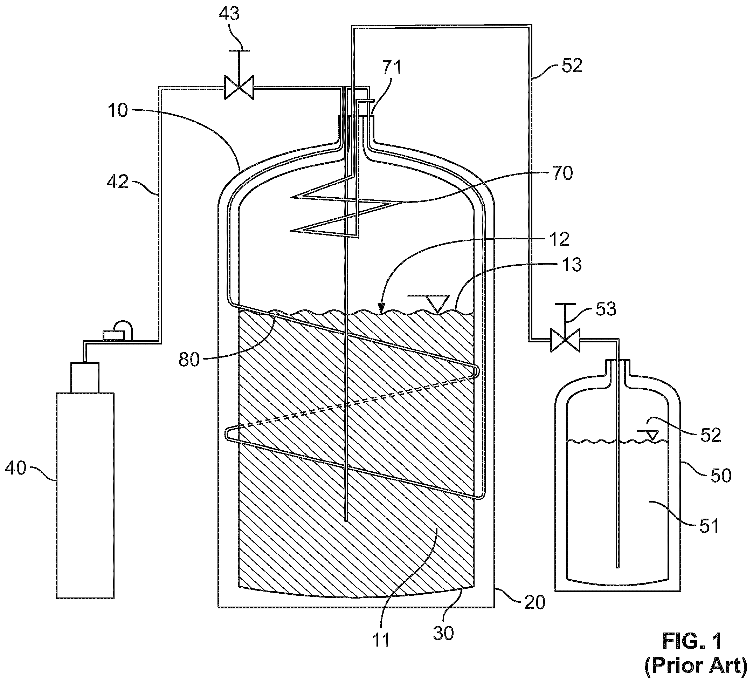

A prior art system for controlling conditions in a cryogenic delivery tank, as shown in Figure 1, utilizes two additional tanks, a cryogenic tank 50 with cryogenic liquid 51 and vapor 52 and a high-pressure cylinder 40 containing cryogenic vapor. Cryogenic liquid 51 can comprise liquid nitrogen. The vapor within cylinder 40 can comprise natural gas. A delivery tank, indicated in general at 10, includes an inner shell 30 and an outer shell 20. Delivery tank 10 contains cryogenic liquid 11 and vapor 12. Cryogenic tank 50 is permanently connected to a first coil 70 by delivery line 52 which is installed in the vapor space or head space of the delivery tank 10. Delivery line 52 includes a valve or other known method of regulating the liquid input from tank 50, indicated generally by 53. High pressure cylinder 40 is permanently connected via delivery line 42 to a second coil 80, which is soldered on the inner side of the outer shell 20 of the delivery tank 10. Second delivery line 42 includes a valve or other known method of regulating the gas input from tank 40, indicated generally by 43.

Pressure reduction in the delivery tank 10 of Figure 1 is accomplished by introducing liquified nitrogen 51 from tank 50 through coiled pipe 70 in the delivery tank. This causes a portion of the vapor 12 to condense, and the pressure within the tank is reduced. The liquified nitrogen shifts to cold nitrogen gas and exits out the top of the delivery tank through the second end of the coiled pipe 70 and is expelled via vent 71.

Saturation is accomplished by introducing natural gas from tank 40 into the delivery tank through second coil 80. Natural gas from tank 40 travels through the coil 80 and is warmed by heat transfer from ambient through the outer shell 20 and coil 80. The warmed natural gas is transferred to the bottom portion of delivery tank 10 and bubbles up through the liquid so as to warm it. In this current system, de-saturation is possible only by depressurization of the whole delivery tank. Venting of methane vapor 12 to atmosphere or burning of the methane vapor.

The above-described system utilizes two additional tanks and line connections between each of the additional tanks and the delivery tank. The processes for pressure reduction, increasing saturation, and decreasing saturation are complicated. EP3196534A1 discloses a fueling system for liquid natural gas.

It is desirable to provide a transportable cryogenic liquid delivery tank to provide a simple and convenient solution for liquefied natural gas storage and associated fueling and defueling of liquefied natural gas vehicle tanks.

### SUMMARY OF THE DISCLOSURE

A cryogenic liquid delivery tank system in accordance with claim 1 and a method of adjusting the pressure of a cryogenic liquid delivery tank system in accordance with claim 7. Advantageous embodiments can be found in the dependent claims.

### BRIEF DESCRIPTION OF THE DRAWINGS

Fig. 1 is a schematic illustration of a conventional cryogenic liquid delivery tank system.
Fig. 2 is a schematic illustration of one embodiment of a delivery tank of the current disclosure.
Fig. 3 is a schematic illustration of one embodiment of a delivery tank system of the current disclosure.
Fig. 4 is a schematic illustration of the pressure reduction operation of the current disclosure.
Fig. 5 is a schematic illustration of the saturation operation of the current disclosure.
Fig. 6 is a schematic illustration of the de-saturation operation of the current disclosure.
Fig. 7 is a schematic illustration of another embodiment of a delivery tank of the current disclosure.

### DETAILED DESCRIPTION OF EMBODIMENTS

An embodiment of the disclosure provides a delivery tank with dual coiled transfer pipe, eliminating the need for separate first and second coil transfer pipe structures. An embodiment of the disclosure also eliminates the need for a second tank comprising natural gas in order to regulate pressure and saturation.

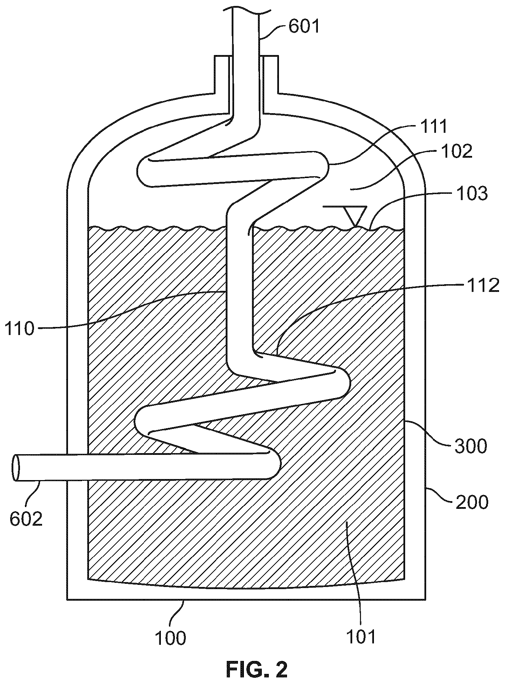

Fig. 2 illustrates a cryogenic delivery tank 100 of the current disclosure. Cryogenic tank 100 is employed to store cryogenic liquid. For example, the cryogenic liquids can be at least one of nitrogen, helium, neon, argon, krypton, carbon dioxide, hydrogen, liquefied natural gas and oxygen, although other types of gases are within the scope of this disclosure. In a preferred embodiment cryogenic delivery tank 100 is used for storing and delivering liquefied natural gas.

In the illustrated embodiment, delivery tank 100 has an inner shell 300 and an outer shell 200, where the inner shell defines an interior of the tank. Cryogenic liquid 101 is stored within the interior of the inner shell 300. Cryogenic liquid 101 occupies a specific volume of delivery tank 100, with the remaining volume occupied by cryogenic gas or vapor 102. The liquid level 103 is included for illustrative purposes, but the liquid level may vary, especially at different events (delivery of LNG, intake of LNG).

Delivery tank 100 has a dual coiled transfer pipe 110 installed inside the inner shell 300 of the delivery tank. Dual coiled transfer pipe 110 can be installed by any known methods in the art. In the illustrated embodiment, as shown in Figure 2, transfer pipe 110 includes two coiled sections forming a headspace coil 111 and a liquid side coil 112. Transfer pipe 110 can include more or less than two coiled sections in different embodiments. Coiled sections 111 and 112 are within the interior of the cryogenic delivery tank. Coiled sections 111 and 112 can utilize any coil shape known in the art. Coiled sections 111 and 112 can be placed in different parts of the inner shell 300 of the delivery tank 100. As illustrated in Figure 2, coiled section 112 is in the top portion of the vessel, at least partially in the section of cryogenic gas 102, while coiled section 111 is in at the bottom of the vessel, at least partially within the section of cryogenic liquid 101.

Dual coiled transfer pipe 110 has a first pipe port 601 and a second pipe port 602 on the other end. First and second pipe ports 601 and 602 can be placed along different sides of the delivery tank 100. In a preferred embodiment, first pipe port 601 is at the top of the delivery tank vessel and the second pipe port 602 is placed on one side of the delivery tank. Both pipe ports can be outside the delivery tank 100. Both pipe ports can also be flush with the vessel edge or partially inside the vessel. As illustrated in Fig. 2, both pipe ports are accessible outside the vessel of the delivery tank 100. Although specific detail is not shown in the figures, both pipe ports (601 and 602) can feature a number of specific fittings. For instance, each other may comprise a removable and reusable seal. Each outlet may also include a valve or vent. The cross-sections of this pipe and other structures can have various shapes, such as a circle, ellipsis, square, triangle, pentagon, hexagon, polygon, and other shapes.

Each of coiled sections 111 and 112 may be in close proximity to or adjacent to first and second pipe ports 601 and 602. In the illustrated embodiment first coiled section 111 is adjacent to the first pipe port 601 and coiled section 112 is adjacent to the second pipe port 602.

In the illustrated embodiment, the cryogenic delivery tank 100 is a vertical tank. In other embodiments, the tank 100 may be a horizontal tank.

Cryogenic delivery tank 100 of the current invention, although shown as double walled, can be single or triple walled as well. The cryogenic tank can be made from copper alloy, nickel alloy, carbon, stainless steel or any other known material in the art.

Cryogenic delivery tank 100 may have insulation between inner and outer walls (or shells) and/or may be vacuum insulated. Single or multilayer insulation of any known materials for insulation can be utilized.

The inner vessel 300 can be joined to the outer vessel 200 by one or more inner vessel support members. For example, as known in the art, the inner vessel support member may connect the neck and base of the inner vessel to the outer vessel.

Cryogenic tank 100 may include devices or gauges for reading different characteristics of the tank. These devices or gauges can show pressure, temperature, differential pressure, liquid level, etc.

In the embodiment of Fig. 2, or any other embodiments of the current disclosure, the delivery tank 100 includes at least one pipe for filling liquefied natural gas or withdrawing it from the tank. In one embodiment there is a separate fill pipe and a separate withdrawal pipe. There may be other paths out of the inner vessel to fill and remove the liquid as well. The fill and withdrawal pipes may be any suitable conduit for conveying or allowing the flow of fluid therethrough.

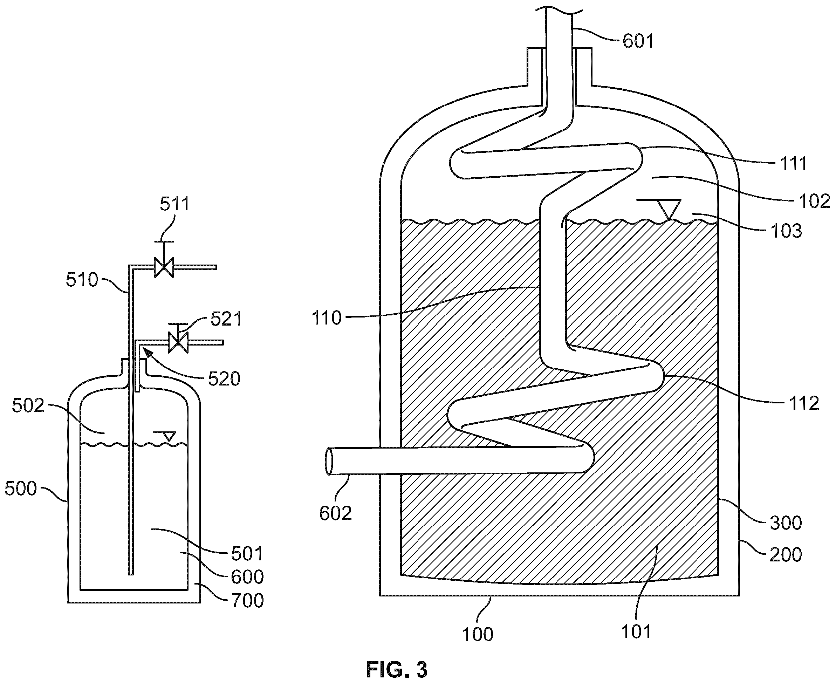

Fig. 3 illustrates an embodiment of a cryogenic delivery tank system of the current disclosure. In the illustrated embodiment, a second tank is present for connection to the cryogenic delivery tank 100. The second tank is a cryogenic tank. Cryogenic tank 500 has a gas outlet pipe 520 and a liquid outlet pipe 510, above the liquid outlet pipe includes a dip tube. Although illustrated separately in the figure, outlets alternatively may be combined into one head from tank 500. Outlet pipes 520 and 510 may be connected to first and second pipe ports 601 and 602 of the dual coiled transfer pipe 110 of delivery tank 100. Pipe outlets of cryogenic tank 500 may be connected to either pipe port of the dual coiled transfer pipe 110 by flexible hose. Although a flexible hose is a preferred connection means, pipes of each tank may be connected by any other known connection means, including, but not limited to, insulated piping. The connection means may be permanent or temporary and can consist of any piping, tube, hose or appropriate conduit. In addition, the pipe outlets of cryogenic tank 500 can be selectively connected to ports 601 and 602 of tank 100 by lines that include one or more valves 511 and 521 to direct fluid from tank 500 to either port 601 or 602 in accordance with the configurations described below.

The second cryogenic tank 500 has an inner shell 600 and an outer shell 700. Cryogenic liquid 501 is stored within the inner shell 600. Cryogenic liquid occupies a specific volume of cryogenic tank 500, with the remaining volume occupied by cryogenic gas or vapor 502. The liquid level is included in the figures for illustrative purposes, but the liquid may vary, especially during different events (delivery of cryogenic liquids or gas, etc.).

In the illustrate embodiment, the second cryogenic tank 500 is a vertical storage tank. In other embodiments, the storage tank 500 may be a horizontal storage tank.

Cryogenic delivery tank 500 of the current invention, although shown as double walled, can be single or triple walled as well. The cryogenic tank can be made from copper alloy, nickel alloy, carbon, stainless steel or any other known material in the art.

Cryogenic tank 500 may also include devices or gauges for reading different characteristics of the tank. These devices or gauges can show pressure, temperature, differential pressure, liquid level, etc.

The second tank may be a gas tank in another embodiment, that is not covered by the appended claims. It can be a high pressure gas tank. The high pressure gas may be nitrogen. In this embodiment, second tank is filled with a gas and doesn't contain liquid. Second tank has a gas outlet pipe. The gas outlet pipe may be connected to first and second pipe ports 601 and 602 of the dual coiled transfer pipe 110 of delivery tank 100. Pipe outlets of the gas tank may be connected to either pipe port of the dual coiled transfer pipe 110 by flexible hose. Although a flexible hose is a preferred connection means, pipes of each tank may be connected by any other known connection means, including, but not limited to, insulated piping. The connection means may be permanent or temporary and can consist of any piping, tube, hose or appropriate conduit. In addition, the pipe outlet of the gas tank may be selectively connected to ports 601 and 602 of tank 100 by lines that include one or more valves to direct gas from the tank to either port 601 or 602 in accordance with the configurations described below.

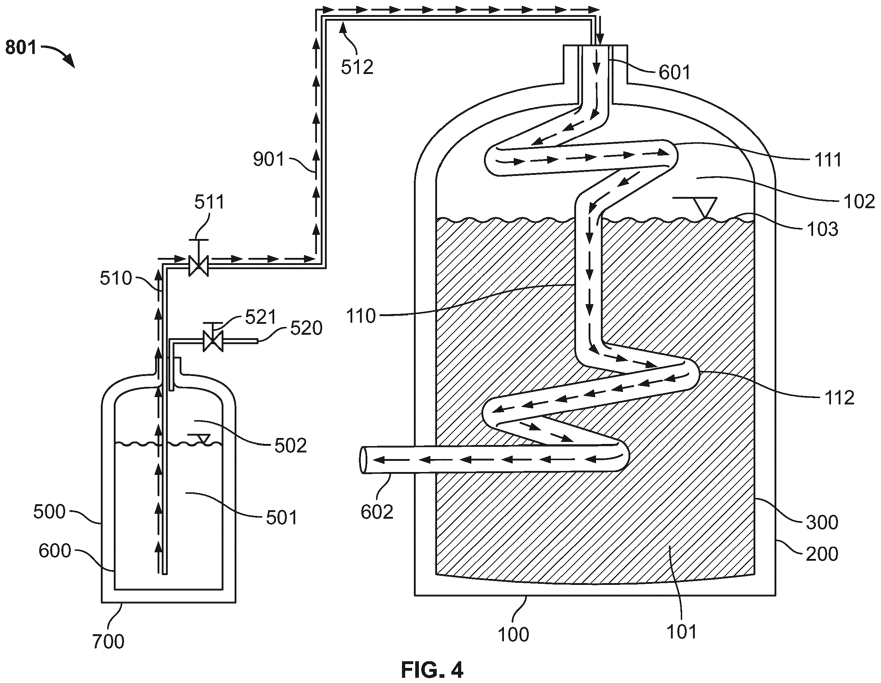

Figure 4 illustrates a pressure reduction configuration of the cryogenic delivery tank system of the current disclosure, indicated in general at 801. When tank pressure needs to be reduced in the delivery tank 100, an operator connects the liquid outlet 510 of cryogenic tank 500 to the delivery tank 100 at first pipe port 601 of the dual coiled transfer pipe 110. As illustrated by the arrows in Figure 4, the cold liquid from tank 500 passes through the transfer pipe 110 within the delivery tank 100 from first pipe port 601 to second pipe port 602. The cold liquid from tank 500 will cause condensation of the gas 102 while in coiled section 111 and drop of pressure in the delivery tank. As it continues to move through transfer pipe 110, the liquid changes state to a gas and exits at pipe port 602 as a gas.

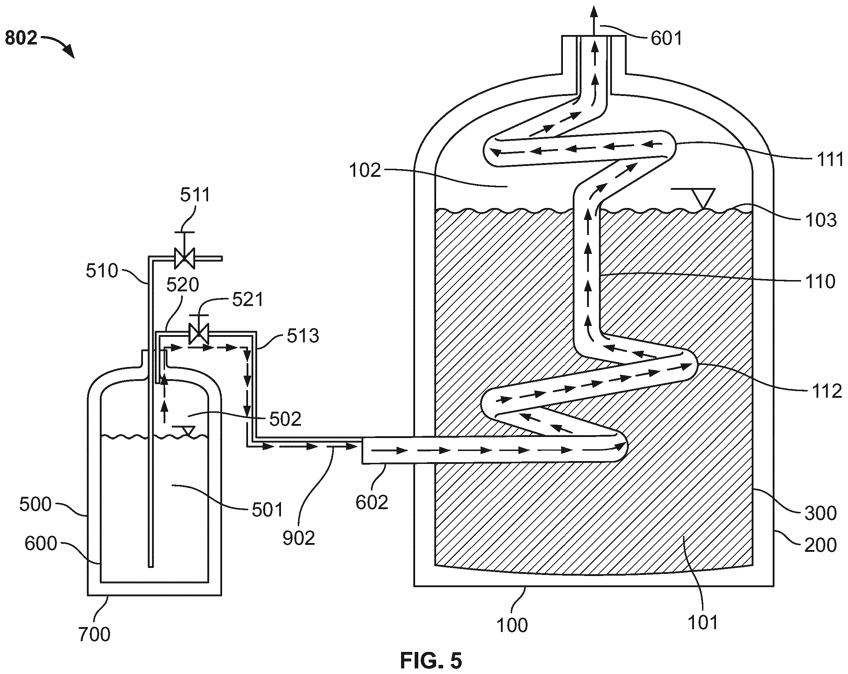

Figure 5 illustrates a saturation configuration of the cryogenic delivery tank system of the current disclosure, indicated in general at 802. When the saturation pressure of the cryogenic liquid 101 needs to be increased, the operator connects the gas outlet pipe 520 of the cryogenic tank 500 to the pipe port 602 of the dual coiled transfer pipe 110 of the delivery tank 100. As illustrated by the arrows in Figure 5, the warm gas 502 passes through dual coiled transfer pipe 110 from second pipe port 602 to first pipe port 601 and is released as a colder gas. The warm gas heats the cryogenic liquid 101 while in coiled section 112 and increases the temperature and, therefore, the saturation pressure of the cryogenic liquid.

In accordance with an embodiment that is not covered by the appended claims, saturation may also be accomplished when the second tank is a gas tank. When the saturation pressure of the cryogenic liquid 101 needs to be increased, the operator connects the gas outlet pipe 520 of the gas tank to the pipe port 602 of the dual coiled transfer pipe 110 of the delivery tank 100. Warm gas passes through dual coiled transfer pipe 110 from second pipe port 602 to first pipe port 601 and is released as a colder gas. The warm gas heats the cryogenic liquid 101 while in coiled section 112 and increases the temperature and, therefore, the saturation pressure of the cryogenic liquid.

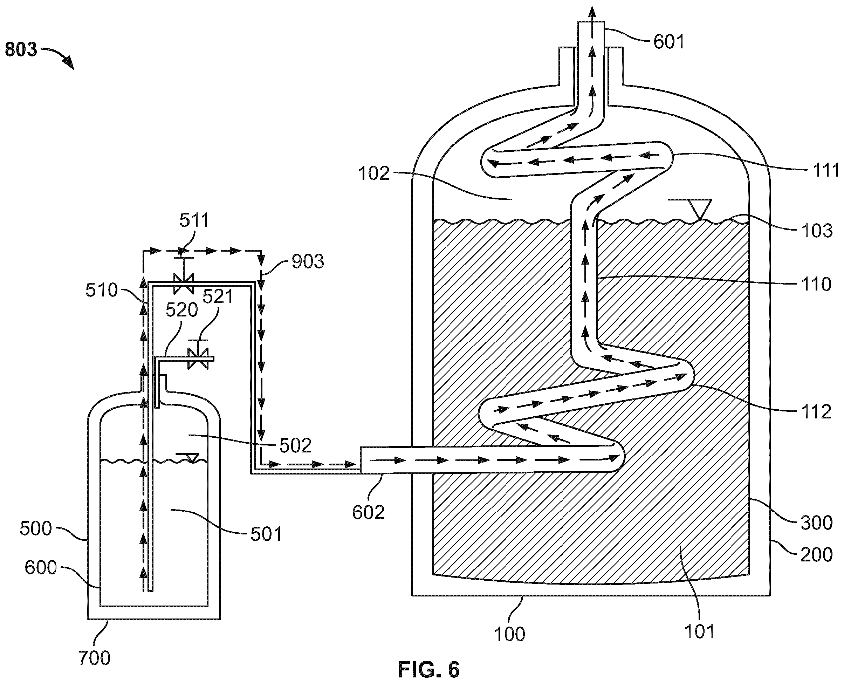

Figure 6 illustrates a de-saturation configuration of the cryogenic delivery tank system of the disclosure, indicated in general at 803. When the saturation pressure of the cryogenic liquid needs to be decreased, the liquid outlet pipe 510 of cryogenic tank 500 is connected to the second pipe port 602 of the dual coiled transfer pipe 110 of the cryogenic delivery tank 10. As illustrated by the arrows in Figure 6, cold cryogenic liquid 501 is passed through the dual coiled transfer pipe 110 from the second pipe port 602 to the first pipe port 601. The cold liquid 501 cools cryogenic liquid 101 and exits first pipe port 601 as a cold gas. The saturation pressure of the cryogenic liquid will decrease.

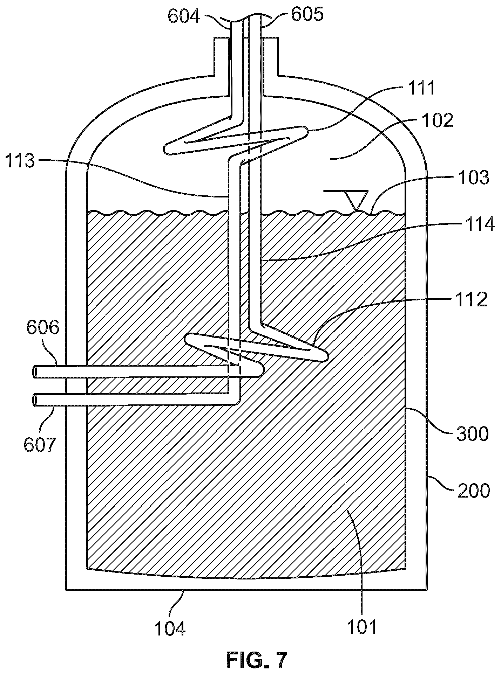

Figure 7 illustrates an additional embodiment of a cryogenic delivery tank 104 of the current disclosure. Cryogenic tank 104 is employed to store cryogenic liquid. For example, the cryogenic liquids can be at least one of nitrogen, helium, neon, argon, krypton, carbon dioxide, hydrogen, liquefied natural gas and oxygen, although other types of gases are within the scope of this disclosure. In a preferred embodiment cryogenic delivery tank 104 is used for storing and delivering liquefied natural gas.

In the illustrated embodiment, delivery tank 104 has an inner shell 300 and an outer shell 200, where the inner shell defines an interior of the tank. Cryogenic liquid 101 is stored within the interior of the inner shell 300. Cryogenic liquid 101 occupies a specific volume of delivery tank 104, with the remaining volume occupied by cryogenic gas or vapor 102. The liquid level 103 is included for illustrative purposes, but the liquid level may vary, especially at different events (delivery of LNG, intake of LNG).

Delivery tank 104 has a two transfer pipes 113 and 114 installed inside the inner shell 300 of the delivery tank. Transfer pipes 113 and 114 can be installed by any known methods in the art. In the illustrated embodiment, as shown in Figure 7, first transfer pipe 113 includes a coiled section forming a headspace coil 111. Second transfer pipe 114 includes a coiled section 112. Coiled sections 111 and 112 are within the interior of the cryogenic delivery tank. Coiled sections 111 and 112 can utilize any coil shape known in the art. As illustrated in Figure 7, coiled section 112 is in the top portion of the vessel, at least partially in the section of cryogenic gas 102, while coiled section 111 is in at the bottom of the vessel, at least partially within the section of cryogenic liquid 101.

Transfer pipe 113 has a first pipe port 604 and a second pipe port 607 on the other end. Transfer pipe 114 has a first pipe port 605 and a second pipe port 606 on the other end. Pipe ports 604, 605, 606 and 607 can be placed along different sides of the delivery tank 104. In a preferred embodiment, first pipe ports 604 and 605 are at the top of the delivery tank vessel and the second pipe ports 606 and 607 are placed on one side of the delivery tank. The pipe ports can be outside the delivery tank 104. The pipe ports can also be flush with the vessel edge or partially inside the vessel. As illustrated in Fig. 7, pipe ports are accessible outside the vessel of the delivery tank 104. Although specific detail is not shown in the figures, pipe ports (604, 605, 606 and 607) can feature a number of specific fittings. For instance, each may comprise a removable and reusable seal. Each port may also include a valve or vent. The cross-sections of this pipe and other structures can have various shapes, such as a circle, ellipsis, square, triangle, pentagon, hexagon, polygon, and other shapes.

Each of coiled sections 111 and 112 may be in close proximity to or adjacent to pipe ports 604, 605, 606 and 607. In the illustrated embodiment first coiled section 111 is adjacent to the first pipe ports 604 and 605 and coiled section 112 is adjacent to the second pipe ports 606 and 607.

In the illustrated embodiment, the cryogenic delivery tank 104 is a vertical tank. In other embodiments, the tank 104 may be a horizontal tank.

Cryogenic delivery tank 104 of the current invention, although shown as double walled, can be single or triple walled as well. The cryogenic tank can be made from copper alloy, nickel alloy, carbon, stainless steel or any other known material in the art.

Cryogenic delivery tank 104 may have insulation between inner and outer walls (or shells) and/or may be vacuum insulated. Single or multilayer insulation of any known materials for insulation can be utilized.

The inner vessel 300 can be joined to the outer vessel 200 by one or more inner vessel support members. For example, as known in the art, the inner vessel support member may connect the neck and base of the inner vessel to the outer vessel.

Cryogenic tank 104 may include devices or gauges for reading different characteristics of the tank. These devices or gauges can show pressure, temperature, differential pressure, liquid level, etc.

In the embodiment of Fig. 7, or any other embodiments of the current disclosure, the delivery tank 104 includes at least one pipe for filling liquefied natural gas or withdrawing it from the tank. In one embodiment there is a separate fill pipe and a separate withdrawal pipe. There may be other paths out of the inner vessel to fill and remove the liquid as well. The fill and withdrawal pipes may be any suitable conduit for conveying or allowing the flow of fluid therethrough.

While the preferred embodiments of the disclosure have been shown and described, it will be apparent to those skilled in the art that changes and modifications may be made therein without departing from the scope of the following claims.

## Claims

1. A cryogenic liquid delivery tank system (100), comprising:
a vessel comprising an inner shell (300) and an outer shell (200) wherein the inner shell defines an interior configured to contain a first cryogenic liquid (101) with a first cryogenic liquid headspace (102) above the first cryogenic liquid;
a transfer pipe (110) passing through the interior of the vessel, said transfer pipe including a head space coil (111) positioned within an upper portion of the interior and a liquid side coil (112) positioned in a lower portion of the interior;
the transfer pipe having a first port (601) adjacent to the head space coil and positioned on or extending from a top portion of the outer shell, and a second port (602) adjacent to the liquid side coil and positioned on or extending from a bottom portion of the side of the outer shell; and
a second cryogenic tank (500) including:
a second tank interior configured to hold a second cryogenic liquid (501) with a second head space (502) above the second cryogenic liquid,
a gas outlet pipe (520) in fluid communication with a top portion of the second tank interior and removably connected to the second port, and
a liquid outlet pipe (510) in fluid communication with a bottom portion of the second tank interior and removably connected to the first and second ports;
the system further comprising a plurality of lines including one or more valves (511, 521), wherein the plurality of lines selectively connect the gas outlet pipe (520) to the second port (602), the liquid outlet pipe (510) to the first (601) port, and the liquid outlet pipe (510) to the second (602) port; and
(A) wherein the gas outlet pipe (520) is connected to the second port (602), wherein in use, gas passes through the transfer pipe (110) from the second port (602) to the first port (601), and heats the cryogenic liquid (101) while in the liquid side coil (112) and increases the temperature, to increase the saturation pressure of the cryogenic liquid (101); and/or
(B) wherein the liquid outlet pipe (510) is connected to the second port (602), wherein in use, cryogenic liquid (501) from the second cryogenic tank (500) is passed through the transfer pipe (110) from the second port (602) to the first port (601), and the cryogenic liquid (501) cools the cryogenic liquid (101) in the vessel to decrease the saturation pressure of the cryogenic liquid (101); and/or
(C) wherein the liquid outlet pipe (510) is connected to the first port (601), wherein in use, cryogenic liquid (501) from the second cryogenic tank (500) passes through the transfer pipe (110) from the first port (601) to the second port (602), and the cryogenic liquid (501) causes condensation of gas in the headspace (102) while in the head space coil (111), to reduce pressure in the vessel.

2. The cryogenic liquid delivery system of claim 1, wherein the second cryogenic liquid is the same as the first cryogenic liquid or wherein the second cryogenic liquid is different from the first cryogenic liquid.

3. The cryogenic liquid delivery tank system of any one of claims 1 to 2, wherein the first cryogenic liquid is liquefied natural gas, and/or wherein the second cryogenic liquid is liquid nitrogen and the second gas is nitrogen.

4. The cryogenic liquid delivery tank system of any of claims 1 to 3, further comprising one or more flexible hoses configured to removably connect the gas outlet pipe to the second port and the liquid outlet pipe to the first and/or second ports.

5. The cryogenic liquid delivery tank system of claim 1 or 4 wherein a single coil includes the head space coil and the liquid side coil.

6. The cryogenic liquid delivery tank system of any of claims 1 or 5, wherein the head space coil is separate and spaced from but in fluid communication with the liquid side coil.

7. A method of adjusting the pressure of a cryogenic liquid delivery tank system (100), the system comprising:
a vessel comprising an inner shell (300) and an outer shell (200) wherein the inner shell defines an interior configured to contain a first cryogenic liquid (101) with a first cryogenic liquid headspace (102) above the first cryogenic liquid;
a transfer pipe (110) passing through the interior of the vessel, said transfer pipe including a head space coil (111) positioned within an upper portion of the interior and a liquid side coil (112) positioned in a lower portion of the interior;
the transfer pipe having a first port (601) adjacent to the head space coil and positioned on or extending from a top portion of the outer shell, and a second port (602) adjacent to the liquid side coil and positioned on or extending from a bottom portion of the side of the outer shell; and
a second cryogenic tank (500) including:
a second tank interior configured to hold a second cryogenic liquid (501) with a second head space (502) above the second cryogenic liquid,
a gas outlet pipe (520) in fluid communication with a top portion of the second tank interior and configured to removably connect to the second port, and
a liquid outlet pipe (510) in fluid communication with a bottom portion of the second tank interior and configured to removably connect to the first and second ports;
the system further comprising a plurality of lines including one or more valves (511, 521), wherein the plurality of lines selectively connect the gas outlet pipe (520) to the second port (602), the liquid outlet pipe (510) to the first (601) port, and the liquid outlet pipe (510) to the second (602) port;
the method comprising the steps of:
(A) connecting the liquid outlet pipe (510) to the first pipe (601) to reduce pressure in the vessel, so that cryogenic liquid (501) from the second cryogenic tank (500) passes through the transfer pipe (110) from the first port (601) to the second port (602), and the cryogenic liquid (501) causes condensation of gas in the headspace (102) while in the head space coil (111) and a drop of pressure in the vessel; and/or
(B) connecting the gas outlet pipe (520) to the second port (602) to increase the saturation pressure of the cryogenic liquid (101), so that gas passes through transfer pipe (110) from the second port (602) to the first port (601), and heats the cryogenic liquid (101) while in the liquid side coil (112) and increases the temperature and the saturation pressure of the cryogenic liquid (101); and/or
(C) connecting the liquid outlet pipe (510) to the second port (602) to decrease the saturation pressure of the cryogenic liquid (101), so that cryogenic liquid (501) from the second cryogenic tank (500) is passed through the transfer pipe (110) from the second port (602) to the first port (601), and the cryogenic liquid (501) cools the cryogenic liquid (101) in the vessel.

8. The method according to claim 7, wherein the system is as defined in any one of claims 2 to 6.

## Patentansprüche

1. Kryogenes Flüssigkeitsausgabetanksystem (100), umfassend:
ein Gefäß, das eine Innenhülle (300) und eine erste Außenhülle (200) umfasst, wobei die Innenhülle einen Innenraum definiert, der konfiguriert ist, um eine erste kryogene Flüssigkeit (101) mit einem ersten Luftraum (102) über der ersten kryogenen Flüssigkeit zu enthalten;
ein durch den Innenraum des Gefäßes verlaufendes Transferrohr (110), wobei das Transferrohr eine Luftraumspule (111) beinhaltet, die innerhalb eines oberen Abschnitts des Innenraums positioniert ist, und eine Flüssigkeitsseitenspule (112) beinhaltet, die in einem unteren Abschnitt des Innenraums positioniert ist;
wobei das Transferrohr einen ersten Anschluss (601) neben der Luftraumspule aufweist, und in einem oberen Abschnitt der Außenhülle positioniert ist, oder sich davon erstreckt, und einem zweiten Anschluss (602) neben der Flüssigkeitsseitenspule, der in einem unteren Abschnitt der Seite der Außenhülle positioniert ist oder sich davon erstreckt; und
einen zweiten Kryotank (500), der beinhaltet:
einen zweiten Tankinnenraum, der konfiguriert ist, um eine zweite kryogene Flüssigkeit (501) mit einem zweiten Luftraum (502) über der zweiten kryogenen Flüssigkeit zu halten,
ein Gasauslassrohr (520) in strömungstechnischer Kommunikation mit einem oberen Abschnitt des zweiten Tankinnenraums, und abnehmbar mit dem zweiten Anschluss verbunden, und
ein Flüssigkeitsauslassrohr (510) in strömungstechnischer Kommunikation mit einem unteren Abschnitt des zweiten Tankinnenraums, und abnehmbar mit dem ersten und zweiten Anschluss verbunden;
wobei das System weiter eine Vielzahl von Leitungen umfasst, die ein oder mehrere Ventile (511, 521) beinhalten, wobei die Vielzahl von Leitungen selektiv das Gasauslassrohr (520) mit dem zweiten Anschluss (602), das Flüssigkeitsauslassrohr (510) mit dem ersten Anschluss (601) und das Flüssigkeitsauslassrohr (510) mit dem zweiten Anschluss (602) verbinden; und
(A) wobei das Gasauslassrohr (520) mit dem zweiten Anschluss (602) verbunden ist, wobei im Gebrauch Gas durch das Transferrohr (110) vom zweiten Anschluss (602) zum ersten Anschluss (601) verläuft und die kryogene Flüssigkeit (101), während sie sich in der Flüssigkeitsseitenspule (112) befindet, erhitzt und die Temperatur erhöht, um den Sättigungsdruck der kryogenen Flüssigkeit (101) zu erhöhen; und/oder
(B) wobei das Flüssigkeitsauslassrohr (510) mit dem zweiten Anschluss (602) verbunden ist, wobei im Gebrauch kryogene Flüssigkeit (501) aus dem zweiten Kryotank (500) durch das Transferrohr (110) vom zweiten Anschluss (602) zum ersten Anschluss (601) verläuft und die kryogene Flüssigkeit (501) die kryogene Flüssigkeit (101) im Gefäß kühlt, um den Sättigungsdruck der kryogenen Flüssigkeit (101) zu verringern, und/oder
(C) wobei das Flüssigkeitsauslassrohr (510) mit dem ersten Anschluss (601) verbunden ist, wobei im Gebrauch kryogene Flüssigkeit (501) aus dem zweiten Kryotank (500) durch das Transferrohr (110) vom ersten Anschluss (601) zum zweiten Anschluss (602) verläuft und die kryogene Flüssigkeit (501) im Luftraum (102), während sie sich in der Luftraumspule (111) befindet, eine Kondensation von Gas bewirkt, um Druck im Gefäß zu reduzieren.

2. Kryogenes Flüssigkeitsausgabesystem nach Anspruch 1, wobei die zweite kryogene Flüssigkeit gleich wie die erste kryogene Flüssigkeit ist oder wobei sich die zweite kryogene Flüssigkeit von der ersten kryogenen Flüssigkeit unterscheidet.

3. Kryogenes Flüssigkeitsausgabetanksystem nach einem der Ansprüche 1 bis 2, wobei die erste kryogene Flüssigkeit verflüssigtes Erdgas ist, und/oder wobei die zweite kryogene Flüssigkeit flüssiger Stickstoff ist und das zweite Gas Stickstoff ist.

4. Kryogenes Flüssigkeitsausgabetanksystem nach einem der Ansprüche 1 bis 3, weiter umfassend einen oder mehrere flexible Schläuche, die konfiguriert sind, um das Gasauslassrohr abnehmbar mit dem zweiten Anschluss, und das Flüssigkeitsauslassrohr mit dem ersten und/oder zweiten Anschluss zu verbinden.

5. Kryogenes Flüssigkeitsausgabetanksystem nach Anspruch 1 oder 4, wobei eine einzelne Spule die Luftraumspule und die Flüssigkeitsseitenspule beinhaltet.

6. Kryogenes Flüssigkeitsausgabetanksystem nach einem der Ansprüche 1 oder 5, wobei die Luftraumspule von der Flüssigkeitsseitenspule getrennt und beabstandet, aber in strömungstechnischer Kommunikation damit steht.

7. Verfahren zum Anpassen des Drucks eines kryogenen Flüssigkeitsausgabetanksystems (100), wobei das System umfasst:
ein Gefäß, das eine Innenhülle (300) und eine erste Außenhülle (200) umfasst, wobei die Innenhülle einen Innenraum definiert, der konfiguriert ist, um eine erste kryogene Flüssigkeit (101) mit einem ersten Luftraum (102) über der ersten kryogenen Flüssigkeit zu enthalten;
ein durch den Innenraum des Gefäßes verlaufendes Transferrohr (110), wobei das Transferrohr eine Luftraumspule (111) beinhaltet, die innerhalb eines oberen Abschnitts des Innenraums positioniert ist, und eine Flüssigkeitsseitenspule (112) beinhaltet, die in einem unteren Abschnitt des Innenraums positioniert ist;
wobei das Transferrohr einen ersten Anschluss (601) neben der Luftraumspule aufweist, und in einem oberen Abschnitt der Außenhülle positioniert ist, oder sich davon erstreckt, und einem zweiten Anschluss (602) neben der Flüssigkeitsseitenspule, der in einem unteren Abschnitt der Seite der Außenhülle positioniert ist oder sich davon erstreckt; und
einen zweiten Kryotank (500), der beinhaltet:
einen zweiten Tankinnenraum, der konfiguriert ist, um eine zweite kryogene Flüssigkeit (501) mit einem zweiten Luftraum (502) über der zweiten kryogenen Flüssigkeit zu halten,
ein Gasauslassrohr (520) in strömungstechnischer Kommunikation mit einem oberen Abschnitt des zweiten Tankinnenraums, und konfiguriert, um abnehmbar mit dem zweiten Anschluss verbunden zu werden, und
ein Flüssigkeitsauslassrohr (510) in strömungstechnischer Kommunikation mit einem unteren Abschnitt des zweiten Tankinnenraums, und konfiguriert, um abnehmbar mit dem ersten und zweiten Anschluss verbunden zu werden;
wobei das System weiter eine Vielzahl von Leitungen umfasst, die ein oder mehrere Ventile (511, 521) beinhalten, wobei die Vielzahl von Leitungen selektiv das Gasauslassrohr (520) mit dem zweiten Anschluss (602), das Flüssigkeitsauslassrohr (510) mit dem ersten Anschluss (601) und das Flüssigkeitsauslassrohr (510) mit dem zweiten Anschluss (602) verbinden;
wobei das Verfahren die Schritte umfasst zum:
(A) Verbinden des Flüssigkeitsauslassrohres (510) mit dem ersten Rohr (601), um Druck im Gefäß zu reduzieren, sodass kryogene Flüssigkeit (501) aus dem zweiten Kryotank (500) durch das Transferrohr (110) vom ersten Anschluss (601) zum zweiten Anschluss (602) verläuft, und die kryogene Flüssigkeit (501) eine Kondensation von Gas im Luftraum (102), während sie sich in der Luftraumspule (111) befindet, und einen Druckabfall im Gefäß bewirkt; und/oder
(B) Verbinden des Gasauslassrohres (520) mit dem zweiten Anschluss (602), um den Sättigungsdruck der kryogenen Flüssigkeit (101) zu erhöhen, sodass Gas durch Transferrohr (110) vom zweiten Anschluss (602) zum ersten Anschluss (601) verläuft und die kryogene Flüssigkeit (101), während sie sich in der Flüssigkeitsseitenspule (112) befindet, erhitzt und die Temperatur und den Sättigungsdruck der kryogenen Flüssigkeit (101) erhöht; und/oder
(C) Verbinden des Flüssigkeitsauslassrohres (510) mit dem zweiten Anschluss (602), um den Sättigungsdruck der kryogenen Flüssigkeit (101) zu senken, sodass kryogene Flüssigkeit (501) aus dem zweiten Kryotank (500) durch das Transferrohr (110) vom zweiten Anschluss (602) zum ersten Anschluss (601) verläuft und die kryogene Flüssigkeit (501) die kryogene Flüssigkeit (101) im Gefäß kühlt.

8. Verfahren nach Anspruch 7, wobei das System nach einem der Ansprüche 2 bis 6 definiert ist.

## Revendications

1. Système de réservoirs de distribution de liquides cryogéniques (100), comprenant :
une cuve comprenant une coque intérieure (300) et une coque extérieure (200) dans lequel la coque intérieure définit un espace intérieur configuré pour contenir un premier liquide cryogénique (101) avec un premier volume d'expansion de liquide cryogénique (102) au-dessus du premier liquide cryogénique ;
un tuyau de transfert (110) passant par l'espace intérieur de la cuve, ledit tuyau de transfert incluant un serpentin de volume d'expansion (111) positionné dans une partie supérieure de l'espace intérieur et un serpentin côté liquide (112) positionné dans une partie inférieure de l'espace intérieur ;
le tuyau de transfert présentant un premier orifice (601) adjacent au serpentin de volume d'expansion et positionné sur, ou s'étendant depuis, une partie supérieure de la coque extérieure, et un second orifice (602) adjacent au serpentin côté liquide et positionné sur, ou s'étendant depuis, une partie inférieure du côté de la coque extérieure ; et
un second réservoir cryogénique (500) incluant :
un espace intérieur du second réservoir configuré pour contenir un second liquide cryogénique (501) avec un second volume d'expansion (502) au-dessus du second liquide cryogénique,
un tuyau de sortie de gaz (520) en communication fluidique avec une partie supérieure de l'espace intérieur du second réservoir et relié de manière amovible au second orifice, et
un tuyau de sortie de liquide (510) en communication fluidique avec une partie inférieure de l'espace intérieur du second réservoir et relié de manière amovible aux premier et second orifices ;
le système comprenant en outre une pluralité de conduites incluant une ou plusieurs vannes (511, 521), dans lequel la pluralité de conduites relie sélectivement le tuyau de sortie de gaz (520) au second orifice (602), le tuyau de sortie de liquide (510) au premier orifice (601), et le tuyau de sortie de liquide (510) au second orifice (602) ; et
(A) dans lequel le tuyau de sortie de gaz (520) est relié au second orifice (602), dans lequel, en cours d'utilisation, un gaz passe par le tuyau de transfert (110) depuis le second orifice (602) jusqu'au premier orifice (601), et chauffe le liquide cryogénique (101) lorsqu'il se trouve dans le serpentin côté liquide (112) et augmente la température, de façon à augmenter la pression de saturation du liquide cryogénique (101) ; et/ou
(B) dans lequel le tuyau de sortie de liquide (510) est relié au second orifice (602), dans lequel, en cours d'utilisation, un liquide cryogénique (501) provenant du second réservoir cryogénique (500) passe par le tuyau de transfert (110) depuis le second orifice (602) jusqu'au premier orifice (601), et le liquide cryogénique (501) refroidit le liquide cryogénique (101) dans la cuve de façon à diminuer la pression de saturation du liquide cryogénique (101) et/ou
(C) dans lequel le tuyau de sortie de liquide (510) est relié au premier orifice (601), dans lequel, en cours d'utilisation, un liquide cryogénique (501) provenant du second réservoir cryogénique (500) passe par le tuyau de transfert (110) depuis le premier orifice (601) jusqu'au second orifice (602), et le liquide cryogénique (501) déclenche une condensation de gaz dans le volume d'expansion (102) lorsqu'il se trouve dans le serpentin de volume d'expansion (111), de façon à réduire une pression dans la cuve.

2. Système de réservoirs de distribution de liquides cryogéniques selon la revendication 1, dans lequel le second liquide cryogénique est le même que le premier liquide cryogénique ou dans lequel le second liquide cryogénique est différent du premier liquide cryogénique.

3. Système de réservoirs de distribution de liquides cryogéniques selon l'une quelconque des revendications 1 à 2, dans lequel le premier liquide cryogénique est du gaz naturel liquéfié, et/ou dans lequel le second liquide cryogénique est de l'azote liquide et le second gaz est de l'azote.

4. Système de réservoirs de distribution de liquides cryogéniques selon l'une quelconque des revendications 1 à 3, comprenant en outre un ou plusieurs tuyaux flexibles configurés pour relier de manière amovible le tuyau de sortie de gaz au second orifice et le tuyau de sortie de liquide au premier et/ou au second orifices.

5. Système de réservoirs de distribution de liquides cryogéniques selon la revendication 1 ou 4, dans lequel un serpentin unique inclut le serpentin de volume d'expansion et le serpentin côté liquide.

6. Système de réservoirs de distribution de liquides cryogéniques selon l'une quelconque des revendications 1 ou 5, dans lequel le serpentin de volume d'expansion est séparé et espacé du serpentin côté liquide, mais en communication fluidique avec celui-ci.

7. Procédé d'ajustement de la pression d'un système de réservoirs de distribution de liquides cryogéniques (100), le système comprenant :
une cuve comprenant une coque intérieure (300) et une coque extérieure (200) dans lequel la coque intérieure définit un espace intérieur configuré pour contenir un premier liquide cryogénique (101) avec un premier volume d'expansion de liquide cryogénique (102) au-dessus du premier liquide cryogénique ;
un tuyau de transfert (110) passant par l'espace intérieur de la cuve, ledit tuyau de transfert incluant un serpentin de volume d'expansion (111) positionné dans une partie supérieure de l'espace intérieur et un serpentin côté liquide (112) positionné dans une partie inférieure de l'espace intérieur ;
le tuyau de transfert présentant un premier orifice (601) adjacent au serpentin de volume d'expansion et positionné sur, ou s'étendant depuis, une partie supérieure de la coque extérieure, et un second orifice (602) adjacent au serpentin côté liquide et positionné sur, ou s'étendant depuis, une partie inférieure du côté de la coque extérieure ; et
un second réservoir cryogénique (500) incluant :
un espace intérieur du second réservoir configuré pour contenir un second liquide cryogénique (501) avec un second volume d'expansion (502) au-dessus du second liquide cryogénique,
un tuyau de sortie de gaz (520) en communication fluidique avec une partie supérieure de l'espace intérieur du second réservoir et configuré pour être relié de manière amovible au second orifice, et
un tuyau de sortie de liquide (510) en communication fluidique avec une partie inférieure de l'espace intérieur du second réservoir et configuré pour être relié de manière amovible aux premier et second orifices ;
le système comprenant en outre une pluralité de conduites incluant une ou plusieurs vannes (511, 521), dans lequel la pluralité de conduites relie sélectivement le tuyau de sortie de gaz (520) au second orifice (602), le tuyau de sortie de liquide (510) au premier orifice (601), et le tuyau de sortie de liquide (510) au second orifice (602) ;
le procédé comprenant les étapes consistant à :
(A) relier le tuyau de sortie de liquide (510) au premier tuyau (601) de façon à réduire une pression dans la cuve, de sorte qu'un liquide cryogénique (501) provenant du second réservoir cryogénique (500) passe par le tuyau de transfert (110) depuis le premier orifice (601) jusqu'au second orifice (602), et le liquide cryogénique (501) déclenche une condensation de gaz dans le volume d'expansion (102) lorsqu'il se trouve dans le serpentin de volume d'expansion (111) et une baisse de pression dans la cuve ; et/ou
(B) relier le tuyau de sortie de gaz (520) au second orifice (602) de façon à augmenter la pression de saturation du liquide cryogénique (101), de sorte qu'un gaz passe par le tuyau de transfert (110) depuis le second orifice (602) jusqu'au premier orifice (601), et réchauffe le liquide cryogénique (101) lorsqu'il se trouve dans le serpentin côté liquide (112) et augmente la température et la pression de saturation du liquide cryogénique (101) ; et/ou
(C) relier le tuyau de sortie de liquide (510) au second orifice (602) de façon à diminuer la pression de saturation du liquide cryogénique (101), de sorte qu'un liquide cryogénique (501) provenant du second réservoir cryogénique (500) passe par le tuyau de transfert (110) depuis le second orifice (602) jusqu'au premier orifice (601), et le liquide cryogénique (501) refroidit le liquide cryogénique (101) dans la cuve.

8. Procédé selon la revendication 7, dans lequel le système est tel que défini selon l'une quelconque des revendications 2 à 6.
